(19) Europäisches Patentamt
European Patent Office
Office européen des brevets

(11) EP 4 087 408 B1

(12) **EUROPEAN PATENT SPECIFICATION**

(45) Date of publication and mention of the grant of the patent:
**19.02.2025 Bulletin 2025/08**

(21) Application number: **21700498.5**

(22) Date of filing: **07.01.2021**

(51) International Patent Classification (IPC):
***A23D 9/007*** (2006.01) ***A23D 9/05*** (2006.01)
***A23J 3/22*** (2006.01) ***A23L 5/40*** (2016.01)
***A23L 35/00*** (2016.01) ***A23D 7/00*** (2006.01)

(52) Cooperative Patent Classification (CPC):
**A23D 9/05; A23D 7/003; A23D 9/007; A23L 5/40; A23L 35/10;** A23J 3/227

(86) International application number:
**PCT/EP2021/050183**

(87) International publication number:
**WO 2021/140148 (15.07.2021 Gazette 2021/28)**

(54) **METHOD FOR PRODUCING AN EMULSION-BASED FAT POWDER TO MANUFACTURE A FOOD PRODUCT**

VERFAHREN ZUR HERSTELLUNG EINES FETTPULVERS AUF EMULSIONSBASIS ZUR HERSTELLUNG EINES LEBENSMITTELPRODUKTS

PROCÉDÉ DE PRODUCTION D'UNE POUDRE DE GRAISSE À BASE D'ÉMULSION POUR FABRIQUER UN PRODUIT ALIMENTAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2020 EP 20151138**

(43) Date of publication of application:
**16.11.2022 Bulletin 2022/46**

(73) Proprietor: **ETH Zürich**
**8092 Zürich (CH)**

(72) Inventors:
- **GUILLET, Pascal Jonas**
  **52070 Aachen (DE)**
- **WINDHAB, Erich Josef**
  **8261 Hemishofen (CH)**
- **REINEKE, Kai**
  **52072 Aachen (DE)**
- **FRERICHS, Maike**
  **4730 Hauset (BE)**

(74) Representative: **Bremi, Tobias Hans**
**Isler & Pedrazzini AG**
**Giesshübelstrasse 45**
**Postfach 1772**
**8027 Zürich (CH)**

(56) References cited:
**US-A- 6 132 790** **US-A1- 2006 013 939**
**US-A1- 2014 220 217** **US-A1- 2018 310 599**

- **BERENDSEN RIKKERT ET AL: "Spray dried double emulsions containing procyanidin-rich extracts produced by premix membrane emulsification: Effect of interfacial composition", FOOD CHEMISTRY, ELSEVIER LTD, NL, vol. 178, 29 January 2015 (2015-01-29), pages 251 - 258, XP029142121, ISSN: 0308-8146, DOI: 10.1016/J.FOODCHEM.2015.01.093**
- **RAMAZANI FARSHAD ET AL: "Strategies for encapsulation of small hydrophilic and amphiphilic drugs in PLGA microspheres: State-of-the-art and challenges", INTERNATIONAL JOURNAL OF PHARMACEUTICS, ELSEVIER, NL, vol. 499, no. 1, 12 January 2016 (2016-01-12), pages 358 - 367, XP029405157, ISSN: 0378-5173, DOI: 10.1016/J.IJPHARM.2016.01.020**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

• GORAN T. VLADISAVLJEVI&CACUTE;: "Structured microparticles with tailored properties produced by membrane emulsification", ADVANCES IN COLLOID AND INTERFACE SCIENCE, vol. 225, 1 November 2015 (2015-11-01), NL, pages 53 - 87, XP055416589, ISSN: 0001-8686, DOI: 10.1016/j.cis.2015.07.013

**Description**

TECHNICAL FIELD

The present invention relates to an emulsion-based fat powder and the use of such a fat powder in food products that serve as animal meat analogues. The present invention also relates to a method for producing such emulsion-based fat powders. Further included in the invention are meat-like food products containing the emulsion-based fat powder.

STATE OF THE ART

Animal meat is one of the most versatile protein-rich food products available. However, the health and environmental benefits of vegetarian and vegan diets are broadly recognized, and consumers are increasingly making conscious efforts to decrease their intake of animal derived food items and their unhealthy ingredients (e.g. saturated fatty acids, cholesterol).

Document US 2018/0310599 A1 discloses a meat-like food product addressing many important aspects for imitating respectively simulating animal meat. For example, such meat-like food products shall have structures, textures and other properties comparable to those of animal meat. As mentioned in US 2018/0310599 A1, the colour and the flavour are further important properties with regard to the imitation of animal meat. Regarding the colour of such a meat-like food products, US 2018/0310599 A1 proposes the usage of food-grade, plant based colorants such as anthocyanins or betalains.

The disadvantage of this known state of the art document can be seen in that the colour properties of meat-like food products may be further improved in order to show a more realistic imitation of animal meat in the raw and cooked state.

<u>Emulsion-based fat powder</u>

The present invention provides in a first aspect an emulsion-based fat powder comprising:

> 1 to 40 wt.% of a dispersible aqueous phase (DP) wherein the DP comprises water and a food colorant and the DP has a pH from 2.5 to 4.5;
> 60 to 99 wt.% of a continuous fat phase (CP) wherein the CP comprises a fat having a melting point of from 40 to 80 °C;
> wherein the wt.% are based on the total weight of the emulsion-based fat powder.

Such emulsion-based fat powders are particularly useful in meat-like food products, which contain a matrix and the fat powder. Upon heating of the food product above the melting point of the used fat, the colorant is released from the fat powder into the matrix.

In particular, it is surprisingly found that when the food colorant is a pH dependent food colorant, upon heating, i.e. cooking, grilling, roasting or the like, of the food product, the food colorant is released into the matrix and equilibrates with the pH of the food, whereby the food product undergoes a colour change from the outer side to the inner side, e.g. from red (like blood) to brown colour. Hence, an emulsion-based fat powder used in a meat-like food product shows a cooking behaviour and properties with respect to colour that mimics animal meat.

In a second aspect, the present invention provides the use of an emulsion-based fat powder as a colorant in food products that serve as animal meat analogues.

In a third aspect, the present invention provides a meat-like food product containing a plant based matrix and the emulsion-based fat powder.

In a fourth aspect, the present invention provides a process for producing an emulsion-based fat powder.

In the emulsion-based fat powder of the invention, the dispersible aqueous phase and the continuous fat phase together form an emulsion. This means that the dispersible or dispersed aqueous phase is present as tiny droplets within the continuous fat phase. Throughout this text, dispersible and dispersed are used interchangeably.

With "powder" is meant that the emulsion-based fat powders consists of fine, dry particles. The powder particles have a particle size (D50) of from 5 to 600 μm, preferably from 10 to 150 μm. A method of determining the particle size is described hereafter (SOP Particle_size_distribution).

Within the meaning of the present invention, the emulsion-based fat powder can be regarded as a dry, solidified emulsion. This means that the fat in the fat powder exists in its solid state at room temperature (20 °C) and below the melting temperature of the fat.

The emulsion-based fat powder according to the present invention has the advantage that, principally, no usage of substances lowering the interfacial tension respectively emulsifiers is necessary. Thus, the fat powder of the invention is further characterized by the absence of an emulsifier, i.e. comprising 0 wt.% emulsifier.

The continuous fat phase realizes an efficient stabilisation of hydrophilic components incorporated in the dispersible aqueous phase or pre-emulsion. Hydrophobic components functioning as active ingredients may be stabilized in the continuous fat phase.

Aqueous phase

The emulsion-based fat powder comprises 1 to 40 wt.%, preferably 1 to 20 wt.% dispersible aqueous phase. The dispersible aqueous phase comprises a food colorant in water.

The pH of the dispersible aqueous phase is from 2.5 to 4.5, preferably from 3 to 4, more preferably from 3 to 3.5. These pH values can be achieved by the use of a food grade buffer substance such as citric acid, ascorbic acid, acetic acid, succinic acid and the like.

Beside the food colorant, the dispersible aqueous phase can also contain hydrophilic additives, such as flavouring substances, useful in the application of the emulsion-based fat powder.

Colorant

The food colorant provides a colour to the fat powder different from the original colour of the fat powder without the colorant. The food colorant comprises preferably a pH dependent food colorant. With pH dependent food colorant is meant that the colorant has a different colour when the pH of a composition containing the food colorant changes to a different value. Preferably the pH dependent food colorant is an anthocyanin-based food colorant. With anthocyanin-based food colorant is meant that the colorant is a composition containing anthocyanins that is suitable for food applications.

Anthocyanins are naturally occurring water soluble pigments. Their colour is pH dependent varying from red at low pH (below 3) to purple at higher pH (above 5).

Anthocyanins are the glucosides of anthocyanidins. Anthocyanidins include cyanidin, dephininidin, europinidin, pelargonidin, malvidin, peonidin and petunidin, for example.

The general structure of anthocyanins and anthocyanidins can be given as follows (EFSA Journal 2013;11(4):3145-"Scientific Opinion on the reevaluation of anthocyanins (E163) as a food additive"):

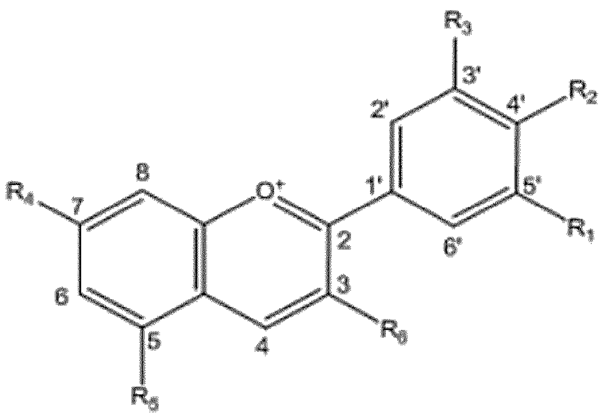

| **Anthocyanidins** | **$R_1$** | **$R_2$** | **$R_3$** | **$R_4$** | **$R_5$** | **$R_6$** |
|---|---|---|---|---|---|---|
| Cyanidin | OH | OH | H | OH | OH | OH |
| Peonidin | $OCH_3$ | OH | H | OH | OH | OH |
| Malvidin | $OCH_3$ | OH | $OCH_3$ | OH | OH | OH |
| Delphinidin | OH | OH | OH | OH | OH | OH |
| Petunidin | $OCH_3$ | OH | OH | OH | OH | OH |
| Pelargonidin | H | OH | H | OH | OH | OH |
| **Anthocyanin** Anthocyanidin-3-O-glucoside | As above | As above | As above | As above | As above | O-glycosyl |

Preferably the food colorant is a concentrate from anthocyanin containing plants, in particular edible fruits and vegetables. More preferably, the anthocyanin based food colorant is a concentrate from one or more of black carrot, purple

carrot, purple sweet potato, hibiscus, radish, red potato, grape, aronia, blueberry and elderberry.

The emulsion-based fat powder can also comprise further colorants to adjust the colour of the final product. These colorants are not necessarily pH dependent. Further colorants include paprika and beetroot concentrate.

The plant concentrate can be obtained from an extract or a juice of plant raw material. A juice or extract can be prepared by first crushing, shredding, chopping or grinding the plant raw material, to obtain smaller pieces of the plant, e.g. several centimetres or millimetres. This process may also comprise a step of (steam) peeling.

In the case of a juice, the crushed raw material is pressed to obtain a juice from the raw material. In case of an extract, the crushed raw material is contacted with an aqueous composition to obtain an extract. The aqueous composition to obtain the extract can be selected from water and water containing processing aids.

The process to obtain the concentrate can further comprise steps known in the art, such as centrifugation, filtration or decanting, for instance to remove fibres and other water-insoluble components.

In the process, processing aids can be used such as citric acid, ascorbic acid and lactic acid and/or technological aids such as enzymes.

The concentrate can be enriched with known technologies such as membrane filtration, fermentation and chromatography. The concentrate can be in liquid form, e.g. a solution or dispersion in water, or can be in solid form, e.g. a powder. The concentrate may consist of 55-95 wt.% dry matter. The concentrate can be dried by methods known in the art, such as by freeze drying, spray drying infrared drying or belt drying.

The concentrate thus obtained can comprise from 0.3 to 20 wt.% anthocyanins based on dry weight of the concentrate, preferably at least 0.5 wt.% anthocyanins. The concentrate will generally comprises up to 15 wt.% anthocyanins, in particular up to 10 wt.%, or even up to 5 wt.%. Quantitative analysis can be carried out by methods known in the art such as high performance liquid chromatography, colorimetry or photometric analysis.

Further components in the concentrate are those obtained from the plant, e.g. sugars, proteins, minerals, organic acids, vitamins, sterols, purines and phenolic compounds. It can also be envisaged to remove some of these components, e.g. sugars and proteins, in the process of preparing the concentrate.

The amount of concentrate in the aqueous phase may vary depending on the dry matter content of the concentrate and the desired colour intensity of the fat powder. It is also important that the aqueous phase is sufficiently liquid to remain processable, i.e. pumpable in the process embodiment described hereafter.

<u>Fat phase</u>

The continuous fat phase is preferably a hard fat, i.e. a fat that is solid at room temperature, at about 20 °C. In particular, the continuous fat phase comprises a fat having a melting point from 40 to 80 °C, preferably from 55 to 70 °C. The fat can be from a single source or can be a mixture of fats of different sources. The fat phase may include natural and processed fats, such as hydrogenated and partially hydrogenated fats. The melting point applies to the fat as a whole (single source or mixture of different sources) and can be determined by methods known in the art, such as DSC or NMR.

In particular, the fat in the fat phase is selected from the group consisting of palm fat, palm kernel fat, palm oil, cocoa butter, shea butter, sal butter, algae fat, insect fat, lard, beef fat, milk fat, sunflower oil, canola oil, thistle oil, soy oil, corn kernel oil, peanut oil, olive oil, herring oil, cotton seed oil, grape seed oil, rapeseed oil, coconut fat, safflower oil, wheat germ oil, walnut oil, sesame oil, hemp seed oil, pumpkin seed oil, linseed oil, poppy-seed oil, algae oil, apricot kernel oil, argan oil, avocado oil, babassu palm oil, behen oil, beech-oil, chia oil, cashew oil, tigernut oil, rose hip kernel oil, hazelnut oil, camellia oil, kukui nut oil, lallemania oil, macadamia oil, almond oil, para nut oil, pistachio oil, rice oil, castor oil, sallow thorn oil, nigella oil, mustard seed oil, beeswax, carnauba wax, sugar cane wax, candelilla wax, japan wax, china wax, wool wax, paraffin wax, cetyl fatty acid esters, cetearyl carboxylic acid ester, alcoholic carboxylic acid ester, synthetically or biotechnically produced triglycerides as well as their mixtures and fractions in (partially) hydrogenated and (partially) inter-esterified form.

Preferably, a fat is used selected from the group consisting of rapeseed oil, coconut fat, sunflower oil and palm fat, optionally fully or partly hydrogenated, and mixtures thereof. In this context the use of oil or fat refers to native state of the fat at room temperature: if the fat is liquid at room temperature (20°C), it is referred to as an oil.

As described above, the skilled person can achieve a suitable fat with a melting point as defined in the invention by known methods and without inventive effort, by using a single source or a blend of fats and/or oils.

The continuous fat phase can also contain further (hydrophilic) substances such as flavours and other additives useful in the application of the emulsion-based fat powder.

<u>Flavour</u>

As described above, the dispersible aqueous phase, continuous fat phase or both, can contain flavouring substances. The flavouring substances added undergo a heat-triggered release as well, i.e. during heating such as cooking, roasting, grilling and the like.

The at least one additionally added flavouring substance may be a lipophilic or hydrophilic flavour substance such as beef, chicken, meat, pork or grilled meat product flavour. In particular, such flavouring substances may be grilled meat flavour, grilled beef flavour, grill flavour, BBQ flavour, meat flavour or the like.

Such an encapsulation of flavouring substances in the dispersible and/or continuous phase of the emulsion-based fat powder has the advantage that a heat-triggered meat-like flavour development during heating imitating a real roasted or grilled meat food product can be achieved next to the imitation of a colour gradient.

Use in animal meat analogues

The present invention also relates to the use of the emulsion-based fat powder as a colorant in food products that serve as animal meat analogues. Food products that serve as animal meat analogues are also referred to here as "meat-like food products". Within the meaning of the present invention, animal meat analogues or meat-like food products can be understood as being high protein food products that serve to replace meat from animals, such as beef, poultry, pork and fish and that imitate the properties of animal meat, e.g. in terms of colour and texture.

The meat-like products can contain a plant-based matrix thereby imitating the properties of an animal meat food product. In particular, the plant-based matrix of a meat-like food product may comprise a protein source and a binder. The matrix may further comprise water, a fat or oil and further known ingredients such as flavours, browning agents, colorants, preservatives and salt (table salt or sodium chloride).

The protein source is not limited, but preferably a plant based source is used selected from soy, pea, bean, chickpea or mixtures thereof. The protein can be granulated or extruded and can also be hydrolysed. The protein source can also be a protein concentrate from a plant.

With binders are meant substances that are included in the matrix to bind the ingredients of the matrix together. Binders include texturizers and can be those known in the art, such as starch, for instance hydrolysed starch, gelatinized starch and native starch, carboxymethyl cellulose, maltodextrin, dextrose etc.

Flavours can be those known in the art used for meat-like food products, such as chicken or beef flavour, herbs, yeast etc. Browning agents can be used to increase browning of the meat-like food product upon cooking, such as sugars.

The matrix may also contain further colorants, beside those in the emulsion-based fat powder, preferably plant concentrates, more preferably concentrates from beet root, paprika or combinations thereof.

The meat-like product can further contain a fat, oil or both. The amount of fat or oil can be adjusted depending on the amount of emulsion-based fat powder that is used, as the fat powder also adds to the total fat content of the product.

Alternatively, the meat-like food product may be realized in the form of so called «cultured meat», wherein a meat analogue may be produced in the laboratory by in vitro cultivation of animal cells. The protein source can also be a sustainable animal protein source, such as insect protein.

The meat-like food product preferably comprises 0.5 to 20 wt.%, preferably from 1 to 10 wt.% of the emulsion-based fat powder, based on the total weight of the food product.

In order to benefit from the advantage of the invention, i.e. a meat-like food product that changes colour upon heating (cooking, grilling, baking), the plant-based matrix preferably has a pH from 5 to 10, preferably 5 to 8.

During heating of the meat-like food product, e.g. roasting or grilling, the pH dependent food colorant is released into the matrix of the meat-like food product when a temperature above the melting point of the fat in the continuous phase is reached. Thereby, the food colorant is confronted with the higher pH of the matrix of the meat-like food product and, as a consequence of the increase of the pH, the food colorant respectively meat-like food product undergoes a colour change from the outer side to the inner side, e.g. from red (like blood) to brown colour. Simultaneously, the flavouring substances added to the dispersible and/or continuous phase undergo a heat-triggered release as well, i.e. during heating such as cooking, roasting, grilling and the like, into the matrix, e.g. hamburger-like matrix, of the meat-like food product, thus imitating the flavour of roasted or grilled meat.

The pH of the matrix of the meat-like food product may be adjusted by means known in the art, such as the use of food-grade pH buffer substances such as citric acid, citrus extract, ascorbic acid, acetic acid, succinic acid, or the like.

A further feature of the meat-like food product of the invention is that the difference in colour shade between raw meat-liked food product and cooked meat-like food product as determined by SOP Colour_Shade_of_Raw_and_Cooked_Vegan_Minced_Meat_Alternatives and expressed as $\Delta E$ according to SOP Fat_Powder_Colour_Shade is more than 5, preferably more than 10.

This $\Delta E$ shows that the consumer using the meat-like food product an experience of colour change upon cooking the meat-like food product that resembles that of animal meat products.

The meat-like food product may be realized in the form of a vegetarian burger, vegetarian chicken, or a meat, beef or fish analogue.

Examples of meat-like food products of the invention are as follows:

Burger of minced beef-like composition:

1-10 wt.% emulsion-based fat powder comprising black carrot, blueberry, grape, hibiscus, elderberry concentrate or mixtures thereof,
0.05-0.2 wt.% paprika concentrate
0.05-0.2 wt.% beet root concentrate
90-99 wt.% plant based matrix containing protein, binder, fat, water.

Tuna-like composition:

3-8 wt. % emulsion-based fat powder comprising one or more of purple carrot, purple sweet potato, red potato concentrate or mixtures thereof,
0.05-0.2 wt.% paprika concentrate
0.05-0.2 wt.% beet root concentrate
92-97 wt.% plant based matrix containing protein, binder, fat, water.

The present invention also relates to a process to make a meat-like food product comprising mixing a protein source, a binder and the emulsion-based fat powder of the invention.

A further aspect of the present invention is related to the use of an emulsion-based fat powder, comprising an aqueous dispersed phase within a high melting continuous fat phase, within a meat-like food product, particularly obtained by a method and/or by an apparatus according to the present invention, wherein the dispersed phase comprises water with a pH dependent food colorant.

Method for making

According to a further aspect, the present invention relates to a method for producing an emulsion-based fat powder comprising the steps of:

a) providing a dispersible aqueous phase (DP) comprising water and providing a continuous fat phase (CP) wherein the CP comprises a fat having a melting point of from 40 to 80 °C;
b) adding a food colorant to the DP;
c) adjusting the pH of DP to a value from 2.5 to 4.5;
d) emulsifying the DP in CP to create a water-in-fat emulsion;
e) stabilizing the water-in-fat emulsion to achieve the emulsion-based fat powder;

wherein the amounts of DP and CP are such that an emulsion-based fat powder is obtained comprising 1 to 40 wt.% DP and 60 to 99 wt.% CP wherein the wt.% are based on the total weight of the emulsion-based fat powder.

In step a) the fat phase is preferably provided at a temperature where the fat is fluid or liquid, i.e. above the melting temperature of the fat used, such as 55 to 90 °C.

Preferred fats and food colorants are those as described above for the emulsion-based fat powder.

The pH of the dispersible aqueous phase is adjusted to 2.5 to 4.5, preferably from 3 to 4, more preferably from 3 to 3.5. These pH values can be achieved by adding a food grade buffer substance such as citric acid, ascorbic acid, acetic acid, succinic acid and the like.

The emulsion obtained in step d) is referred to as a water-in-fat emulsion, indicating that the fat phase is the continuous phase and the aqueous phase is the dispersed phase. The water-in-fat emulsion can also be referred to as a water-in-oil emulsion as long as the fat phase is not solidified. Thus, above the melting temperature of the fat, the emulsion can also be referred to as a water-in-oil emulsion.

In step d) preferably a droplet size of the DP in the CP is achieved from 0.01 μm to 5 μm, more preferably from 0.01 μm to 1 μm. Droplet size can be determined by microscopy methods known in the art. This droplet size results in a good distribution of the colour throughout the final food product and a mechanically highly stable fat powder that keeps the colorant encapsulated until preparation of the food product (i.e. cooking or grilling).

Step d) can be performed by a process based on a rotor-stator principle, preferably a membrane emulsification process.

The membrane emulsification process can be carried out in a membrane emulsifying unit, preferably in the form of a dynamic membrane emulsification unit.

Stabilization of the water-in-fat emulsion is achieved by cooling the emulsion to a temperature below the melting point of the fat. According to a preferred embodiment, the stabilization of the water-in-fat emulsion is achieved in a chilled spray tower, wherein the water-in-fat emulsion is sprayed into a chilled gas phase having a temperature of from -50°C to 0 °C. Spraying may be carried out with an atomizer at a pressure of between 1 bar and 10 bar (0.1 and 1 MPa).

Apparatus

The present invention also provides an apparatus, in particular for performing the method according to the present invention. The apparatus comprises an emulsifying unit for receiving a water-in-fat emulsion; a stabilizing unit for achieving an emulsion-based fat powder based on the water-in-fat emulsion; and optionally an incorporating unit for incorporating the achieved emulsion-based fat powder into a food product, in particular a meat-like food product.

Preferably, the emulsifying unit is a rotor-stator emulsification unit, more preferably a membrane emulsification unit. More preferably, the membrane emulsification unit of the apparatus according to the present invention is designed in the form of a concentric cylinder system (i.e. based on a rotor-stator-principle). Such membrane emulsifier in the form of a concentric cylinder system may comprise two coaxially arranged outer and inner hollow cylinders, wherein the inner hollow cylinder is designed as a rotating unit (i.e. functioning as rotor) and wherein the cylinder surface is provided with a membrane (i.e. with a rotating membrane). Thereby, the inner cylinder may be designed to receive the dispersed phase and the membrane of the cylinder surface of the inner cylinder may be designed to allow the passage of the dispersed phase through the pores of the membrane into the outer hollow cylinder. Furthermore, the outer hollow cylinder (being fixed to the housing of the membrane emulsification unit and thus functioning as stator) may be designed to allow the passage of the continuous phase, such that, during operation of such membrane emulsification unit, the dispersed phase from the inner cylinder is dispersed into the continuous phase generating an emulsion, in particular a water-in-fat emulsion according to the present invention.

Such membrane emulsification unit in the form of a concentric cylinder system has the advantage that the transmembrane pressure is additionally increased by the generated centrifugal force during operation. Furthermore, such membrane emulsification unit in the form of a concentric cylinder system is particularly suitable for the production of multiple, in particular double, emulsions. Furthermore, so called Taylor vortex can be observed during operation of such membrane emulsification unit which may be correlated to a reduction of the droplet size of the dispersed phase.

According to a preferred embodiment of the present invention, the stabilizing unit is realized by a chilled spray tower.

BRIEF DESCRIPTION OF THE DRAWINGS

Fig. 1 shows a schematic view of a preferred apparatus and method according to the present invention;

Fig. 2a shows a schematic view of a first preferred embodiment of a membrane emulsification unit in the form of a concentric cylinder system with a rotating membrane, preferably as emulsifying unit within a preferred apparatus according to the present invention;

Fig. 2b shows a schematic view of second preferred embodiment of a membrane emulsification unit in the form of a concentric cylinder system with a static membrane, preferably as emulsifying unit within a preferred apparatus according to the present invention;

Fig. 3 shows a schematic view of a preferred, emulsion-based fat powder based on a water-in-fat emulsion according to the present invention;

Fig. 4 shows a schematic view of a preferred, emulsion-based fat powder based on a water-in-fat emulsion according to the present invention incorporated into a meat-like food product.

Figure 5 shows the colour shift, expressed as ΔE, of burgers of vegan minced meat alternatives prior and after cooking containing fat-encapsulated black carrot concentrate with different pH-levels.

Figure 6 shows the L*a*b values of raw and cooked burgers of beef meat and burgers of different plant based minced meat alternatives.

Figure 7 shows the ΔE of raw and cooked burgers of plant based minced meat alternatives, compared to the colour changing behaviour of raw and cooked burgers of beef meat.

Figure 8 shows the ΔE values for raw and cooked vegan minced meat alternatives mixed with different natural fruit and vegetable concentrates in comparison to ground beef meat.

More in detail, Fig.1 shows a schematic view of a preferred apparatus A and method according to the present invention for producing an emulsion-based fat powder 17 to manufacture a food product, in particular a meat-like food product.

As can be seen in Fig.1 the preferred apparatus A according to the present invention comprises an emulsifying unit in the form of a membrane emulsification unit 10 for receiving a water-in-fat emulsion, a stabilizing unit in the form of a chilled spray tower 16 for achieving an emulsion-based fat powder 17 based on the water-in-fat emulsion.

The preferred embodiment of the apparatus A further comprises a first, preferably double-jacked, tank 7 for storing and conditioning the continuous fat phase CP, wherein such first tank 7 is operatively connected here with a

corresponding first pump 8 (preferably an eccentric screw pump) by means of a double-jacketed tubing 9 and wherein such first pump 8 pumps the continuous fat phase towards the membrane emulsification unit 10.

Fig. 2 exemplifies the membrane emulsification unit 10 realized in the form of a concentric cylinder system. The continuous fat phase CP may be melted at a temperature preferably between 20°C to 100°C. The first pump 8 may be operated here at a throughput between 5kg/h to 500kg/h at a temperature between 20°C to 100°C. Moreover, Fig.1 shows a second, preferably double-jacked, tank 13 for storing and conditioning the dispersed aqueous phase.

The second tank 13 is operatively connected here with a corresponding second pump 12 (preferably an eccentric screw pump) by means of a double-jacked tubing 9, wherein such second pump 12 pumps the dispersed phase towards the membrane emulsification unit 10.

The second pump 12 (preferably an eccentric screw pump) may be operated here at a through put between 1kg/h to 200kg/h at a temperature between 20°C to 100°C. During emulsification of the dispersed phase into the continuous phase by means of a membrane emulsification unit 10 (in particular realized in the form of a concentric cylinder system), the rotational speed may be set here between 100rpm to 10'000rpm and a flushing tank (not shown here) interconnected between the second pump 12 and the second tank 13 (see Fig.1) for the dispersed phase may be set here at a pressure between 1 bar to 30 bar.

According to an alternative embodiment, second tank 13 may be used for the preparation of a pre-emulsion with respect to the preparation of a multiple, in particular a double, emulsion, together with a homogenizer (e.g. Polytron PT-MR 6000), as exemplified later on.

According to an alternative method of carrying out the present invention, the emulsifying step is divided in two steps, wherein a pre-emulsion is produced e.g. by means of a homogenizer within the second tank 13 at first, and the achieved pre-emulsion is transferred to a membrane emulsification unit 10, thereby achieving a multiple, in particular a double, emulsion. In case of using the second tank 13 for the preparation of a pre-emulsion in order to receive a multiple, in particular a double, emulsion, the temperature within the second tank 13 may be set between 10°C to 100°C during operation.

Within the meaning of the alternative method of the present invention, the dispersed phase of the pre-emulsion, preferably having a droplet size between 0.1$\mu$m to 5$\mu$m, more preferably between 0.1$\mu$m to 1$\mu$m, can be regarded as the inner dispersed phase of the resulting emulsion-based fat powder 17, whereas the, typically water-soluble, continuous phase of the pre-emulsion can be regarded as the outer dispersed of the resulting emulsion-based fat powder 17. Preferably, such continuous phase of the pre-emulsion may comprise added thickeners such as sodium alginate, cellulose, agar-agar, et cetera, or any combinations thereof, in order to increase the viscosity. Preferably, the dispersed phase respectively continuous phase of the pre-emulsion may comprise at least one food colorant

In case of a pre-emulsion, the dispersed phase respectively continuous phase of the pre-emulsion may further comprise at least one additionally added flavouring substance may be a lipophilic and/or hydrophilic flavor substance such as beef, chicken, meat, pork or grilled meat product flavour. Most preferably, the ingredients of the dispersed phase of the pre-emulsion may be different from the ingredients of the continuous phase of the pre-emulsion depending on the dedicated solubility of the respective ingredient.

The received water-in-fat emulsion may be stabilized by means of a chilled spray tower 16, as illustrated in Fig.1, in order to achieve an emulsion-based fat powder 17. The chilled spray tower 16 is preferably operatively connected with a temperature sensor 14 for measuring the temperature within the chilled spray tower 16 and a control unit 15 for controlling temperature and atomization pressure of the chilled spray tower 16. The atomization pressure is used for controlling the particle size of emulsion-based fat powder 17. During the spray chilling process within the chilled spray tower 16, the liquid water-in-fat emulsion (or multiple emulsion) received from the membrane emulsification unit 10 by means of a double-jacketed tubing 9 is sprayed by means of an atomizer (or spraying nozzle) into a chilled gas phase within the chilled spray tower 16. As a consequence, the fat respectively wax of the continuous phase crystalizes instantly and surrounds the incorporated dispersed phase achieving an emulsion-based fat powder 17.

During operation of the chilled spray tower 16 to achieve an emulsion-based powder, the temperature of the chilled gas phase (e.g. based on liquid nitrogen) within the chilled spray tower 16 may be set here between -50°C to 0°C and the atomization pressure of the atomizer may be set here between 1 bar to 10 bar.

Moreover, the apparatus A may further comprise an incorporating unit (not shown here) for incorporating the achieved emulsion-based fat powder 17 into a food product, in particular a matrix of a meat-like food product (see Fig.3), wherein the incorporating unit may be realized by a kneading machine.

Fig. 2a shows a schematic view of a first preferred embodiment of a membrane emulsification unit 10 in the form of a concentric cylinder system with a rotating membrane M, preferably as emulsifying unit within a preferred apparatus A according to the present invention. As can be seen in Fig. 2, such membrane emulsification unit 10 in the form of a concentric cylinder system may comprise two coaxially arranged outer hollow cylinder 102 and inner hollow cylinder 101, wherein the inner hollow cylinder 101 is designed as a rotating unit (as indicated by an arrow) and wherein the cylinder surface is provided with a membrane M.

Thereby, the inner hollow cylinder 101 may be designed to receive the dispersed phase coming from the second

pump 12 by means of a first input line 103 and a plurality of through-holes 105 here, and the membrane M of the cylinder surface of inner hollow cylinder 101 may be designed to allow the passage of dispersed phase through the pores of the membrane M (indicated by arrow) into the outer hollow cylinder 102 (indicated here by dashed lines). Furthermore, the outer hollow cylinder 102 may be designed to allow the passage of the continuous phase CP by means of a second input line 104 here, such that, during operation of such membrane emulsification unit 10, the dispersed phase DP from the inner hollow cylinder 101 is dispersed into the continuous phase generating an emulsion, in particular a water-in-fat emulsion 1, according to the present invention which may be stabilized by means of a chilled spray tower (not shown here, see Fig.1) afterwards.

Fig. 2b shows a schematic view of second preferred embodiment of a membrane emulsification unit 10 in the form of a concentric cylinder system with an outer static membrane M, preferably as emulsifying unit within a preferred apparatus A according to the present invention.

The second preferred embodiment of a membrane emulsification unit 10 comprises two coaxially arranged outer hollow cylinder 102 and inner cylinder 101, wherein the inner cylinder 101 is designed as a rotating unit (as indicated by an arrow). The outer static membrane M (illustrated here by dashed lines) is arranged between the outer cylinder 102 and the inner cylinder 101. This second preferred embodiment of a membrane emulsification unit 10 may be designed to allow the passage of the continuous phase CP between the inner cylinder 101 and the static membrane M, whereas the membrane emulsification unit 10 may be designed to allow the passage of the dispersed phase DP between the outer cylinder 102 and the static membrane M such that, during operation, the dispersed phase DP is dispersed into the continuous phase CP generating an emulsion, in particular a water-in-fat emulsion 1. Such second preferred embodiment of a membrane emulsification unit 10 has the advantage that a static membrane is more suitable for scaling up compared to the first preferred embodiment as shown in Fig.2a. Furthermore, the dynamic cylinder increases the shear stress at the inner membrane wall, resulting in efficient detachment of droplets from the inner membrane wall. As a further advantage of the second preferred embodiment, the temperature can be controlled by the flushing of the hollow cylinder 101.

Such membrane emulsification unit 10 in the form of a concentric cylinder system as shown in Fig.2a respectively Fig.2b is particularly suitable for the production of multiple, in particular double, emulsions. The method and related apparatus according to the present invention (as generally described with respect to Fig.1) is further illustrated by the following non-limiting example with respect to the production an emulsion-based powder 17 based on a multiple, in particular double, emulsion achieving an emulsion-based fat powder 17 (see Table):

| Equipment / Material | Parameter | Value |
|---|---|---|
| First double-jacketed, tank 7 (for storing and conditioning the continuous phase CP / high melting fat): Melt about 10kg of fat, in particular "palm fat, rapeseed fat, sunflower fat" | Temperature | Preferably about 60°C to 70°C |
| First pump 8 (eccentric screw pump) | Through put | Preferably set to about 14kq/h |
| Double-jacketed tubing 9 (between first pump 8 and membrane emulsification unit 10) | Temperature | Preferably about 60°C to 70°C |
| Second tank 13 (for the preparation of a pre-emulsion with 50wt% of dispersed phase) as follows:<br>(1) Mix about 300ml distilled water preferably with 300ml of pH dependent colorant, in particular anthocyanin based food colorants;<br>(2) Stir resp. disperse for about 20min using a homogenizer (e.g. Polytron PT-MR 6000);<br>(3) Add 1wt% to 2wt% of thickener (e.g. sodium alginate during step (2) | Temperature<br>Rotational speed / time | Preferably about 25°C<br>Preferably about 8'000rpm |
| Second pump 12 (eccentric screw pump) | Throughput | Preferably about 3.5kg/h in order to receive an amount of 10wt% of dispersed phase);<br>Preferably about 7.5kg/h in order to receive an amount of 20wt% of dispersed phase);<br>Preferably about 12.5kg/h in order to receive an amount of 40wt% of dispersed phase); |

(continued)

| Equipment / Material | Parameter | Value |
|---|---|---|
| Double-jacketed tubing 9 (between second pump 12 and membrane emulsification unit 10) | Temperature | Preferably about 60°C to 70°C |
| Flushing tank (at the second tank 13) | Pressure | About 15bar |
| Membrane emulsification unit 10 (according to the second preferred embodiment of Fig.2b);<br><br>Outer membrane M | Rotational speed (of inner solid cylinder);<br>Pore size | Preferably about 7'500rpm (for receiving a droplet size of the dispersed emulsion between 0,1μm to 5μm to be atomized in the spray chilling tower);<br>Between 50μm to 200μm |
| Chilled spray tower 16 | Temperature<br><br>Atomization pressure (at spray nozzle) | About -20°C (chilled gas phase based on liquid nitrogen);<br>Preferably about 3bar (for receiving a particle size of the received emulsion-based fat powder of about 60μm);<br><br>Preferably about 5bar (for receiving a particle size of the received emulsion-based fat powder of about 30μm); |

As can be learnt from this example, the amount of dispersed phase DP in the continuous phase CP can be controlled by the throughputs of pump 8 resp. pump 12. Furthermore, the particle size of received emulsion-based fat powder can be controlled by the atomization pressure of the spray nozzle of the chilled spray tower 16.

Fig.3 shows a schematic view of a preferred, emulsion-based fat powder 17 based on a water-in-fat emulsion according to the 10 present invention, wherein a dispersed phase DP is dispersed within a continuous phase CP, in particular in the form of a high melting fat. For example, food colorants are added to the dispersible phase DP and the pH is adjusted and stabilized in a way that the colorant is present in red colour in order to imitate the red flesh colour of uncooked meat. According to a preferred embodiment of the invention, at least one flavour substance is additionally added to the dispersible phase DP and/or to the continuous phase CP.

According to a further preferred embodiment of the invention, unsaturated fat components may be additionally added to the continuous phase CP in order to improve the nutritional effect of the produced emulsion-based fat powder 17.

Fig.4 shows a schematic view a preferred, emulsion-based fat powder 17 based on a "pure" water-in-fat emulsion comprising a dispersed phase DP and a continuous phase CP according to the present invention incorporated into a food product, in particular a meat-like food product. In case of a meat-like food product, the particles of the emulsion-based fat powder 17 are incorporated into a matrix A being e.g. a hamburger-like matrix A, of the meat-like food product. Preferably, the matrix A of the meat-like food product is adjusted to a pH 5 to 10, more preferably 5 to 8. Furthermore, the amount of emulsion-based fat powder within the food product is preferably between 1wt% to 30wt%, more preferably between 1wt% to 10wt%.

LIST OF REFERENCE NUMERALS

1 Water-in-fat emulsion in liquid form
7 First tank (double-jacked for storing and conditioning the 5 continuous phase)
8 First Pump (for pumping the continuous phase)
9 Double-jacketed tubing
10 Membrane emulsification unit
101 Inner hollow cylinder
102 Outer hollow cylinder
103 First input line (for the dispersed phase)
104 Second input line (for the continuous phase)
105 Through-holes (for the dispersed phase)
12 Second pump (for pumping the dispersed phase)
13 Second tank (for storing and conditioning the dispersed phase)

14 Temperature sensor (for measuring the temperature within the chilled spray tower)
15 Control unit (for controlling temperature and atomization pressure of the chilled spray tower)
16 Chilled spray tower
17 Emulsion-based fat powder
A Apparatus
CP Continuous Phase
DP Dispersed Phase
M Membrane
MA Matrix (of the food product)

TEST METHODS

Determination of colour load of the fat powder (SOP Colour Load Fat Powder)

For the measurement of the colour load of the fat powder 0.500g ± 0.01 g of the powder was suspended in 9.5mL pH3 buffer solution. The solution was filled in a glass vial with a magnetic stirrer and put in a microwave syntheses reactor (Monowave 200; AntonPaar AG). The temperature of the sample was measured with a glass fibre in the thermal centre of the sample. Under continuous stirring at 600rpm the sample was heated in 45s to 80 °C (± 1°C) and kept at this temperature for 3min. This temperature was significantly above the melting point of all tested fats. After the extraction of the encapsulated natural colorant the sample was cooled within 2 min to 55°C. The fat of the sample crystalized at the surface of the aqueous solution.

For the measurement of the colour load the solid fat layer was removed, and the clear aqueous solution was filled in VIS cuvettes (Brand GmbH & Co. KG; Wertheim, Germany) with a path length of 10mm. Spectra from 380 to 750 nm were recorded in a Lambda 25 UV/VIS spectrometer (PerkinElmer). The absorbance was measured at max peak wavelength (nm) and 700 nm. The reason for measuring the absorbance at 700 nm is to correct haze in the sample.

The colour intensity (CI) was calculated based on the max absorbance peak of the different fruit and vegetable concentrates (Amax) in the pH3 buffer solution and was calculated as follows:

$$CI = (A_{max} - A_{700}) \cdot DF$$

In which DF is defined as:

$$DF = \frac{Sample\ [g] + Dilution\ medium\ [g]}{Sample\ [g]}$$

Determination of the colour encapsulation efficiency of the fat powder (SOP Encapsulation Efficiency)

For the determination of the encapsulation efficiency, 1g ± 0.01 g of the fat powder were suspended in 99 mL pH 3 buffer solution. The suspension was intensely stirred at 900 rpm with a magnetic stirrer in in 150 mL glass beaker for 15 min. Natural colorants that were not or only partly encapsulated diffused into the pH 3 buffer solution. After 15min 10mL of the aqueous solutions was filter through a 0.45μm syringe filter. The CI of aqueous solutions was measured as described in SOP Colour_Load_Fat_Powder.

The encapsulation efficiency was calculated as the ratio of [non-encapsulated colour] / [colour load of the fat powder] in %.

Determination of the particle size of fat powder (SOP Particle size distribution)

The SOP to determine the particle size distribution is in accordance with ISO 13320:2009-12-01(E). The fat powder was measured using static light scattering instrument (Mastersizer 3000, Malvern) equipped with a Small Volume Sample Dispersion Unit (Malvern). Measurements were done at ambient temperature. The Dispersion Unit was filled with sunflower oil and the stirred speed set to 2500rpm.

Approximately 1g of fat powder was pre diluted in 50mL of the same sunflower oil. This dispersion was filled in the Sample Dispersion Unit until an obscuration of 4 to 8 % was achieved. The refractive index was set to 1.4694 and the particle absorbance to 1.0. Particles are regarded as opaque spheres (Fraunhofer approximation). The Mie model was applied to calculate the size of the particles. The particle diameter of each sample corresponds to 10%, 50% or 90% of the cumulative undersize distribution by volume. The calculation of the particle diameter [D10, D50, D90 (μm)] was done using the Mastersizer Software 3.63.

Determination of the dispersed phase (DP) droplet size (SOP droplet size)

The SOP to determine the disperse phase droplet size is based on a confocal laser scanning microscopic (CLSM) measurement. Before producing the emulsion based fat powder, the dispersed phase was stained with nile blue (Sigma-Aldrich, USA). To measure the dispersed phase droplet size, fat powders containing dispersed phase droplets stained with nile blue were dispersed in hydriol (Hydrior AG, Wettingen CH) and the dispersion was transferred to a microscopic slide for subsequent imaging analysis in the CLSM. Images of the stained fat particles were acquired using a Zeiss LSM 780 (Zeiss, Germany) equipped with a 63x 1.4 Oil Plan-Apochromat DIC M27 objective. Resolution was 0.1/pixel at an image size of 1355x1355 pixels. Image analysis was performed with ImageJ (National Instruments of Health, USA).

Determination of fat powder colour shade (L*a*b and chroma and hue angle) (SOP Fat Powder Colour Shade)

The SOP to determine the colour shade of the fat powder is based on a surface colour measurement with a Hunterlab UltraScan VIS (Hunter Associates Laboratory, Inc., Reston, USA) by using the Easy Match QC ver. 4.78 measurement software (Hunter Associates Laboratory, Inc., Reston, USA). For the measurement, the equipment was set to reflection specular included mode, a view area 9.525 $mm^2$ and the setting "UVF nominal" was used.

The fat powder was sieved through a sieve with 150μm mash size to remove potential large particles. The homogenous samples were filled in two 20 mm glass cuvettes (Hunter Associates Laboratory, Inc., Reston, USA). The two cuvettes were measured on both transparent sides, resulting in 4 individual measurements. After the measurement, the arithmetic mean for the Lightness (L*) a*(green to red), b*(blue to yellow), chroma (C*) and hue angle (h) was calculated out of these 4 data sets.

The calculation of the delta E (ΔE) is based on the following equation:

$$\Delta E = \sqrt{(L_1 - L_2)^2 + (a_1 - a_2)^2 + (b_1 - b_2)^2}$$

Where the index 1 and 2 represent the measured values for two individual samples that are compared.

Determination of the colour shade of raw and cooked vegan minced meat alternatives (SOP Colour Shade of Raw and Cooked Vegan Minced Meat Alternatives)

Raw and cooked vegan minced meat alternatives were prepared in accordance with the vegan burger recipe and preparation described in examples section "general procedure".

L*a*b and C*h values to characterize the colour shade of the raw and cooked minced meat alternatives were measured with a digital colour imaging system (DigiEye; VeriVide Ltd.). Therefor high-resolution pictures under defined light conditions of 2 slices (with 1cm height) from the cross section of the center of each burger were taken and analyzed with the Digi-Pix colour measurement module of the Analysis DigiEye Software Version 2.8.05 (DigiEye; VeriVide Ltd.). A digital filter was used to exclude white fat particles as well as pits and cracks on the uneven surface of the burger cross sections, to exclude shadowing effect on the surface colour measurement. For the calculation of the L*a*b and C*h values an area of approximately 8 $cm^2$ was analyzed, which gave averaged values for the colour of the raw and cooked minced meat alternatives.

EXAMPLES

General procedure to encapsulate natural colours

| Equipment / Material | Parameter | Value |
|---|---|---|
| First double-jacketed, tank 7 (for storing and conditioning the continuous phase CP / high melting fat):Melt about 10kg of palm stearin (Prifex 300SG, SimeDarby, Zwijndrecht, Nederlands) (see table 1 for fat composition) | Temperature | Preferably about 70°C |
| First pump 8 (eccentric screw pump) | Through put | Preferably set to about 30kg/h |
| Double-jacketed tubing 9 (between first pump 8 and membrane emulsification unit 10) | Temperature | Preferably about 70° |

(continued)

| Equipment / Material | Parameter | Value |
|---|---|---|
| Second tank 13 for storing and conditioning the natural colour (aqueous dispersed phase DP).<br>EXBERRY® Black Carrot Concentrate (GNT International, Mierlo, Nederlands) with a colour intensity Cl of 1400 (see table 1 for other natural colours) | Temperature | Preferably about 10°C |
| Second pump 12 (eccentric screw pump)* | Throughput | Preferably about 1kg/h in order to receive an amount of 2.5wt% of dispersed phase);<br>Preferably about 2.5kg/h in order to receive an amount of 3.5wt% of dispersed phase);<br>Preferably about 3.5kg/h in order to receive an amount of 4.5wt% of dispersed phase); |
| Double-jacketed tubing 9 (between second pump 12 and membrane emulsification unit 10) | Temperature | Preferably about ’70°C |
| Flushing tank (at the second tank 13) | Pressure | About 15bar |
| Membrane emulsification unit 10 (according to the second preferred embodiment of Fig.2b);<br>Outer membrane M | Rotational speed (of inner solid cylinder);<br>Pore size | Preferably about 7’500rpm (for receiving a droplet size of the dispersed emulsion between 0.1μm to 5μm to be atomized in the spray chilling tower);<br>Between 100μm |
| Chilled spray tower 16 | Temperature<br>Atomization pressure (at spray nozzle) | About -20°C (chilled gas phase based on liquid nitrogen);<br>Preferably about 6bar (for receiving a particle size of the received emulsion-based fat powder of about 50μm); |
| *The throughput of second pump 12 can be adjusted based on the desired colour intensity of the emulsion-based fat powder (determined by SOP Colour_Load_Fat_Powder). | | |

General procedure to prepare minced meat alternatives

The preparation used for the vegan minced meat burger patty is composed out of 2 parts. All ingredients used are listed in table 1 (dosage and composition of the used fat-powder) and table 2 (composition of the vegan minced meat burger patty).

Table 1.: Overview of powder compositions and powder properties tested in the example 1 -4

| | | | | | | | | Hunterlab (SOP Fat_Powder_Colour Shade) | | | | |
|---|---|---|---|---|---|---|---|---|---|---|---|---|
| Fat / fat compositio n | Meltin g Point [°C] | Natural colour | Colour Intensity | Encapsulation efficiency [%] | D10 [µm] | D50 [µm] | D90 [µm] | L | a | b | C | h |
| Palm fat | 61 | Black carrot | 202 | 77 | 30.7 | 97.1 | 210.0 | 43.7 | 19.8 | 2.8 | 20.0 | 8.0 |
| Palm fat | 61 | Black carrot | 57 | 81 | 31.6 | 96.6 | 221.0 | 43.3 | 33.0 | 4.3 | 33.3 | 7.4 |
| Rape seed fat | 71 | Black carrot | 28 | 60 | 17.8 | 69.7 | 196.0 | 53.8 | 30.0 | 3.2 | 30.2 | 6.2 |
| Rape seed fat | 71 | Black carrot | 55 | 70 | 7.1 | 25.4 | 42.4 | 58.1 | 26.2 | 1.8 | 26.3 | 4.0 |
| 30% Rape seed / 70 % Coco nut fat | 55 | Black carrot | 88 | 59 | 20.4 | 78.7 | 164.0 | 43.3 | 33.0 | 4.3 | 33.3 | 7.4 |
| 40% Rape seed / 60 % Coco nut fat | 58 | Black carrot | 55 | 79 | 11.5 | 49.9 | 85.7 | 48.2 | 19.9 | 1.5 | 19.9 | 4.3 |
| 50% Rape seed / 50 % Coco nut fat | 60 | Black carrot | 45 | 75 | 15.3 | 66.3 | 162.0 | 50.7 | 21.6 | 1.7 | 21.6 | 4.6 |
| Rape seed fat | 72 | Back carrot pH 3.3 | 106 | 76 | 18.0 | 75.5 | 202.0 | 53.0 | 23.5 | 2.0 | 23.5 | 4.8 |
| Rape seed fat | 72 | Back carrot pH 4.0 | 38 | 77 | 10.5 | 42.6 | 75.5 | 58.4 | 23.8 | -0.2 | 23.8 | 359.4 |
| Rape seed fat | 72 | Back carrot pH 4.5 | 48 | 80 | 13.6 | 53.6 | 108.0 | 57.2 | 19.2 | -0.8 | 19.2 | 357.6 |
| | | | | | | | | Hunterlab (SOP Fat_Powder Colour Shade) | | | | |
| Fat / fat compositio n | Meltin g Point [°C] | Natural colour | Colour Intensity | Encapsulation efficiency [%] | D10 [µm] | D50 [µm] | D90 [µm] | L | a | b | C | h |
| Rape seed fat | 72 | Back carrot pH 5.0 | 38 | 78 | 9.3 | 46.9 | 87.9 | 57.4 | 18.8 | -1.2 | 18.8 | 356.2 |
| Rape seed fat | 72 | Aronia | 40 | 85 | 13.4 | 59.6 | 119.0 | 52.2 | 26.2 | 4.9 | 26.7 | 10.6 |
| Rape seed fat | 72 | Radish | 99 | 98 | 14.2 | 55.7 | 121.0 | 57.4 | 39.3 | 10.8 | 40.8 | 15.3 |
| Rape seed fat | 72 | Beet Root | 72 | 91 | 16.1 | 60.5 | 123.0 | 52.5 | 28.6 | -0.8 | 28.6 | 358.5 |
| Rape seed fat | 72 | Beet Root Juice | 25 | 67 | 14.9 | 56.3 | 108.0 | 59.1 | 28.3 | -1.6 | 28.3 | 356.8 |

(continued)

| | | | | | | | | Hunterlab (SOP Fat_Powder Colour Shade) | | | | |
|---|---|---|---|---|---|---|---|---|---|---|---|---|
| Fat / fat compositio n | Meltin g Point [°C] | Natural colour | Colour Intensity | Encapsulation efficiency [%] | D10 [µm] | D50 [µm] | D90 [µm] | L | a | b | C | h |
| Rape seed fat | 72 | Purple carrot | 194 | 90 | 16.9 | 59.9 | 129.0 | 44.7 | 19.4 | 1.2 | 19.5 | 3.7 |
| Rape seed fat | 72 | Red potato | 49 | 87 | 15.0 | 54.7 | 120.0 | 65.4 | 40.0 | 11.4 | 41.6 | 15.9 |
| Rape seed fat | 72 | Purple sweet potato | 60 | 86 | 12.0 | 45.6 | 120.0 | 56.5 | 37.0 | -0.6 | 37.0 | 359.1 |
| Rape seed fat | 72 | Blueberry | 13 | 77 | 12.9 | 50.2 | 95.0 | 58.4 | 24.6 | 1.0 | 24.6 | 2.2 |
| Rape seed fat | 72 | Grape | 35 | 86 | 14.6 | 65.8 | 148.0 | 51.7 | 22.4 | 1.6 | 22.4 | 4.1 |
| Rape seed fat | 72 | Hibiscus | 40 | 71 | 14.9 | 56.3 | 108.0 | 55.6 | 22.6 | 2.0 | 22.7 | 5.1 |
| Rape seed fat | 72 | Elderberr y | 74 | 95 | 14.3 | 55.2 | 129.0 | 53.9 | 22.5 | 3.6 | 22.8 | 9.1 |
| Rape seed fat | 72 | Paprika | 50 | 83 | 8.6 | 32.7 | 54.4 | 66.1 | 29.7 | 32.3 | 43.9 | 47.4 |

For the first part, the soy granulate was mixed with water and stored until all water was absorbed into the granulate. For the second part at first all dry ingredients were mixed. Afterwards sunflower oil was added and well mixed. Part 1 and 2 of the recipe were blended and the dough was minced through a meat mincer equipped with a 8mm perforated disc. The pH value of the raw vegan minced meat alternative was 6.3.

Liquid or fat powder natural colours were added to the minced meat dough and mix thoroughly. Afterwards burger patties of 120 g with a diameter of ~ 9.7 cm and a thickness of ~ 16 mm were formed out of the coloured vegan minced meat dough.

The coloured vegan minced meat burger patty was cooked in a pan preheated to 185 °C. Before cooking 2 tablespoons of sunflower oil were added. The vegan minced meat burger patties were cooked at medium heat for 4 minutes every side until a core temperature of 74 °C was reached.

Table 2: Ingredients for the preparation of a vegan minced meat burger patty

| Ingredients: | [%] | Supplier |
|---|---|---|
| Soy granulate | 20.2 | Vantastic- Foods |
| Water | 58.6 | |
| Vegan binder | 7.1 | Fi & S B.V. |
| Soy protein isolate | 4.0 | Stoertebeker Gewuerze |
| Dextrose | 1.0 | Cargill |
| Table salt | 1.5 | |
| Sunflower oil | 7.6 | |
| TOTAL | 100.0 | |

Table 3. Used dosage of different fat-encapsulated natural colours and liquid natural colour used in Example 1 to 4.

| **Encapsulated natural color** | **Example** | **Beet root conc. [%]** | **Paprika conc. [%]** | **Black carrot conc. [%]** | **Encapsulated conc. [%]** | **pH value raw burger** |
|---|---|---|---|---|---|---|
| Reference without added colour | General procedure | | | | | 6.3 |
| Trial with liquid concentrate | 1 | 0.15 | 0.11 | 0.1 | | 6.4 |
| Encapsulate d black carrot | 1&3 | 0.15 | 0.11 | | 1.6 | 6.2 |
| Black carrot pH 3.0 | 2 | 0.15 | 0.11 | | 6 | |
| Black carrot pH 3.3 | 2 | 0.15 | 0.11 | | 1.6 | 6.2 |
| Black carrot pH 4.0 | 2 | 0.15 | 0.11 | | 4.5 | 6.2 |
| Black carrot pH 4.5 | 2 | 0.15 | 0.11 | | 3.5 | 6.2 |
| Black carrot pH 5.0 | 2 | 0.15 | 0.11 | | 4.4 | 6.2 |
| Aronia | 4 | 0.15 | 0.11 | | 4.2 | 6.2 |
| Radish | 4 | 0.15 | 0.11 | | 1.7 | 6.2 |
| Beetroot | 4 | 0.15 | 0.11 | | 2.3 | 6.2 |
| Beetroot juice | 4 | 0.15 | 0.11 | | 6.7 | 6.2 |
| Purple carrot | 4 | 0.15 | 0.11 | | 0.9 | 6.2 |
| Red potato | 4 | 0.15 | 0.11 | | 3.4 | 6.2 |
| Purple sweet potato | 4 | 0.15 | 0.11 | | 2.8 | 6.2 |
| Blueberry | 4 | 0.15 | 0.11 | | 13.1 | 6 |
| Grape | 4 | 0.15 | 0.11 | | 4.8 | 6.1 |
| Hibiscus | 4 | 0.15 | 0.11 | | 4.3 | 6.1 |

(continued)

| Encapsulated natural color | Example | Beet root conc. [%] | Paprika conc. [%] | Black carrot conc. [%] | Encapsulated conc. [%] | pH value raw burger |
|---|---|---|---|---|---|---|
| Elderberry | 4 | 0.15 | 0.11 | | 2.3 | 6.2 |
| Paprika | 4 | 0.15 | 0.11 | | 3.4 | 6.2 |
| conc. : concentrate | | | | | | |

The colour shade values of the uncoloured raw and cooked vegan minced meat burger patty are summarized in table 4. L*a*b* and C*h values were measured as described in SOP Colour_Shade_of_Raw_and_Cooked_Vegan_Minced_Meat_Alternatives.

Table 4. Colour values for a raw and cooked vegan minced meat burger patty without the addition of a natural colour (comparative values)

| | L* | a* | b* | C* | h |
|---|---|---|---|---|---|
| Raw | 51.09 | 8.14 | 13.16 | 15.48 | 58.25 |
| Cooked | 51.56 | 12.535 | 19.23 | 22.95 | 56.91 |

Example 1

For example 1, the colour of the vegan minced meat was optimized towards a close to well done beef meat colour shade after cooking. The vegan minced meat was coloured with liquid natural colours only or with a black carrot concentrate (pH 3.3) encapsulated with the process of the invention in combination with a liquid beet root and liquid paprika concentrate. The concentrations used are listed in table 3 and are adjusted to the same pigment concentration for both trials.

It is known that the betalains, which are the colouring pigments in beet root, as well as oleosins and carotenoids, which are the colouring pigments in paprika, are not pH sensitive regarding the colour shade. Whereas anthocyanins, which are the main colouring pigments in black carrot, are sensitive towards pH regarding the colour shade. At low pH values they have predominantly red colour shades which shift a bluish/ grayish purple at pH values close to neutral.

Table 5. Colour shade values of raw and cooked vegan minced meat alternatives with liquid colours only or with encapsulated black carrot concentrate

| | | L | a | b | C | h | ΔE* |
|---|---|---|---|---|---|---|---|
| **raw** | liquids black carrot | 62.3 | 10.3 | 21.1 | 23.5 | 64.1 | 16.6 |
| | encapsulated black carrot | 51.2 | 19.7 | 13.2 | 23.7 | 33.8 | |
| | | | | | | | |
| | | | | | | | |
| **Cooked** | liquids black carrot | 48.2 | 9.4 | 13.6 | 25.4 | 68.3 | 3.4 |
| | encapsulated black carrot | 45.5 | 11.0 | 12.5 | 16.6 | 48.5 | |
| ΔE*: comparison in colour between liquid colours and encapsulated black carrot concentrate | | | | | | | |

From table 5 it is clearly visibly that the fat-encapsulation of the black carrot concentrate with a pH of 3.3 significantly changes the colour shade in the raw minced meat alternative. The prepared burger patty had a visual colour appearance close to raw beef meat (comparison in example 3), because the pH value of the pH sensitive black carrot concentrate is maintained at a low pH level, resulting in a red colour shade. Whereas the non-encapsulated black carrot immediately gets the pH value of the vegan minced meat alternative (pH 6.2) and consequently shifts to a grayish purple. This results in a high ΔE of 16.6 when comparing the colour shade of the burger patty coloured with liquid concentrates and the burger patty coloured with fat-encapsulated black carrot concentrate.

During cooking a core temperature of 74 °C was reached, which is well above the melting point of the rapeseed fat

used in this example. Hence, the capsules melt during preparation and the pH- value of the released black carrot concentrate equilibrize with the burger patty (pH 6.2). This effect in combination the thermal degradation of betalains in both burger patties, result in nearly the same colour shade of both burger patties after cooking (ΔE 3.4).

Example 2

In this example the pH value of the black carrot concentrate was adjusted to 3, 3.3, 4.0, 4.5 and 5.0 prior it was encapsulated in hydrogenated rape seed fat with the process of this invention. The colour shade of the powder is shown in table 6.

Table 6. L*a*b* and C*h values for fat-encapsulated black carrot concentrate with different pH value prior encapsulation (SOP Fat_Powder_Colour_Shade)

| | L* | a* | b* | C* | h | ΔE* |
|---|---|---|---|---|---|---|
| **pH 3.0** | n.d. | n.d. | n.d. | n.d. | n.d. | n.d. |
| **pH 3.3** | 53.0 | 23.5 | 2.0 | 23.6 | 4.8 | 0.0 |
| **pH 4.0** | 58.4 | 23.9 | -0.3 | 23.9 | 359.4 | 17.0 |
| **pH 4.5** | 57.2 | 19.2 | -0.8 | 19.3 | 357.6 | 21.5 |
| **pH 5.0** | 57.4 | 18.8 | -1.2 | 18.8 | 356.2 | 25.6 |
| ΔE*compares the colour values of the fat-encapsulated concentrates of pH 4.0, 4.5 and 5, respectively vs the fat-encapsulated concentrate with pH 3.3<br>n.d.: not determined | | | | | | |

From table 6 it is clearly visible that the a value shifts from 23.5 at pH 3.3 to 18.8 if the pH is increased to pH 5.0. This shift in combination with the shift of the b value result in a visual purple colour shade of the powder with a black carrot concentrate of 5.0 versus an intense pinkish red colour of the fat-powder with black carrot concentrate at a pH of 3.0.

If these powders are mixed into a vegan minced meat alternative, as described above, and adjusted to an equal CI, it is visible that the colour shift from a raw burger patty to its cooked counterpart is less pronounced, see Figure 5 which shows the colour shift, expressed as ΔE of the burgers of vegan minced meat alternatives before (raw) and after cooking.

Example 3

In this example of the current invention, burgers of a vegan minced meat alternative containing a black carrot concentrate (pH 3.3) encapsulated in a blend of 30% rape seed fat and 70% coconut fat, is compared to the colour change of burgers of a beef meat and to burgers of meat alternatives commercially available, of which one is from Impossible food (believed to be described in EP3628173A1 - colouring principle based on non-animal heme-containing protein / leghemoglobine) and one is from Beyond Meat (believed to be described in US2018/0310599A1 (colouring principal based on plant extracts including fruit and vegetable concentrate and natural colours) and other existing plant based ground meat replicates. All burger patties were cooked as described in the general procedure to prepare minced meat alternatives. The measurement of the colour shade of the raw and cooked burger was done as described in SOP Colour_Shade_of Raw_and_Cooked_Vegan_Minced_Meat_Alternatives.

The results are shown in figure 6 and Table 7.

**Table 7**

| **Product Name** | **State of burger** | **L*** | **a*** | **b*** | **ΔE** |
|---|---|---|---|---|---|
| Beef Burger* | Raw | 49.7 | 28.7 | 14.5 | |
| | Cooked | 54.9 | 10.6 | 15.4 | 18.9 |
| | Raw | 51.2 | 19.7 | 13.2 | |
| Burger with encapsulated black carrot | Cooked | 45.5 | 11.0 | 12.5 | 10.4 |
| Impossible Burger | Raw | 44.9 | 22.3 | 15.7 | |
| | Cooked | 44.2 | 10.8 | 14.6 | 11.6 |

(continued)

| Product Name | State of burger | L* | a* | b* | ΔE |
|---|---|---|---|---|---|
| Beyond Burger | Raw | 52.73 | 13.46 | 12.25 | |
| | Cooked | 47.14 | 16.04 | 19.15 | 9.2 |
| Market sample 1 | Raw | 49.1 | 13.3 | 13.5 | |
| | Cooked | 49.8 | 14.2 | 17.3 | 3.9 |
| Market sample 2 | Raw | 53.7 | 20.2 | 13.1 | |
| | Cooked | 50.3 | 22.8 | 18.9 | 7.3 |
| Market sample 3 | Raw | 46.0 | 27.4 | 23.3 | |
| | Cooked | 47.4 | 30.2 | 25.5 | 3.8 |

From figure 6 it is visible that the current invention mimics the behavior of ground beef meat regarding the a* and b* value. For most plant based minced meat alternative the L-value decreases after cooking, whereas the L-value of ground beef meat increases.

A comparison of the ΔE values (between burgers of plant based minced meat alternatives and burgers of beef meat, for raw (fresh) and cooked (baked) burger patties) of existing product on the market and the invention described here, shows that taking into account the changes of the raw and cooked burger patty, the current invention is closest (small ΔE values) to the colour changing behaviour of ground beef meat (figure 7).

Example 4

To exemplify that the described invention is not limited to black carrot concentrate, different natural colour concentrates that are mainly composed of anthocyanins (black carrot, aronia, radish, purple carrot, red potato, purple sweet potato, blueberry, grape, hibiscus and elderberry) were fat-encapsulated. Further red beet concentrate, red beet juice with the addition of ascorbic acid and paprika were fat encapsulated. The main colouring pigments in red beet (betalains) and paprika (oleosins and carotenoids) are not pH sensitive, in contrast to anthocyanins.

These fat-encapsulated powders were mixed into the vegan minced meat alternative as described in the general procedure to prepare minced meat alternatives. The colour intensities of the fat-encapsulated powders and the used type of fat are listed in Table 1. The used dosage level to achieve an equal colour intensity compared to dosage of black carrot concentrate used in example 1 and 3 are shown in table 3.

In figure 8 comparison of the colour changing behaviour of burgers of the different fruit and vegetable concentrates compared to burgers of ground beef meat is shown. It is obvious that blueberry, grape, hibiscus, and elderberry behave similar to the black carrot concentrate and could as well be used to mimic the colour changing behaviour of minced ground beef meet. The difference of the ΔE for fat encapsulated red beet are due to, that the betalains in red beet decompose at higher temperatures. For paprika, particularly the carotenoids dissolve in the fat of the vegan minced meat alternatives during the cooking, which results in a more yellow colour shade, which explains the high ΔE compared to raw and cooked minced beef meat.

## Claims

**1.** An emulsion-based fat powder comprising:

1 to 40 wt.% of a dispersible aqueous phase (DP) wherein the DP comprises water and a food colorant and the DP has a pH from 2.5 to 4.5;
60 to 99 wt.% of a continuous fat phase (CP) wherein the CP comprises a fat having a melting point of from 40 to 80 °C;
wherein the wt.% are based on the total weight of the emulsion-based fat powder.

**2.** The emulsion-based fat powder according to claim 1, wherein the food colorant is a pH dependent food colorant, preferably an anthocyanin based food colorant.

**3.** The emulsion-based fat powder according to claim 2, wherein the anthocyanin based food colorant is a concentrate from one or more of black carrot, purple carrot, purple sweet potato, hibiscus, radish, red potato, grape, aronia,

blueberry and elderberry.

**4.** The emulsion-based fat powder according to any one of the preceding claims, wherein the pH of the DP is from 3 to 4, preferably from 3 to 3.5.

**5.** The emulsion-based fat powder according to any one of the preceding claims, wherein the fat in the CP has a melting point from 55 to 70 °C.

**6.** The emulsion-based fat powder according to any one of the preceding claims, which comprises 1 to 20 wt.% DP and 80 to 99 wt.% CP.

**7.** The emulsion-based fat powder according to any one of the preceding claims, which has a particle size (D50) of 5 to 600 μm, preferably of 10 to 150 μm.

**8.** Use of an emulsion-based fat powder according to any one of the preceding claims, as a colorant in food products that serve as animal meat analogues.

**9.** A meat-like food product containing a plant-based matrix and an emulsion-based fat powder according to any one of claims 1 to 7, wherein the plant-based matrix comprises a protein source and a binder.

**10.** The meat-like food product according to claim 9, comprising 0.5 to 20 wt.%, preferably from 1 to 10 wt.% of the emulsion-based fat powder, based on the total weight of the food product.

**11.** Meat-like food product according to claim 9 or 10, wherein the plant based matrix has a pH from 5 to 10, preferably 5 to 8.

**12.** A method for producing an emulsion-based fat powder comprising the steps of:

a) providing a dispersible aqueous phase (DP) comprising water and providing a continuous fat phase (CP) wherein the CP comprises a fat having a melting point of from 40 to 80 °C;
b) adding a food colorant to the DP;
c) adjusting the pH of DP to a value from 2.5 to 4.5;
d) emulsifying the DP in the CP to create a water-in-fat emulsion;
e) stabilizing the water-in-fat emulsion to achieve the emulsion-based fat powder;

wherein the amounts of DP and CP are such that an emulsion-based fat powder is obtained comprising 1 to 40 wt.% DP and 60 to 99 wt.% CP wherein the wt.% are based on the total weight of the emulsion-based fat powder.

**13.** The method according to claim 12, wherein in step d) a droplet size of the DP is achieved from 0.01 μm to 5 μm, preferably from 0.01 μm to 1 μm.

**14.** The method according to claim 13, wherein step d) is performed by a process based on a rotor-stator principle, preferably a membrane emulsification process.

**15.** The method according to any one of claims 12 to 14, wherein step e) is performed in a chilled spray tower wherein the fat is cooled to below the melting point of the fat.

## Patentansprüche

**1.** Ein Fettpulver auf Emulsionsbasis, das Folgendes umfasst:

1 bis 40 Gew.-% einer dispergierbaren wässrigen Phase (DP), wobei die DP Wasser und einen Lebensmittelfarbstoff umfasst und die DP einen pH-Wert von 2,5 bis 4,5 aufweist;
60 bis 99 Gew.-% einer kontinuierlichen Fettphase (CP), wobei die CP ein Fett mit einem Schmelzpunkt von 40 bis 80 °C umfasst;
wobei sich die Gew.-% auf das Gesamtgewicht des Fettpulvers auf Emulsionsbasis beziehen.

2. Das Fettpulver auf Emulsionsbasis nach Anspruch 1, wobei der Lebensmittelfarbstoff ein pH-abhängiger Lebensmittelfarbstoff, vorzugsweise ein Lebensmittelfarbstoff auf Anthocyanbasis, ist.

3. Das Fettpulver auf Emulsionsbasis nach Anspruch 2, wobei der Lebensmittelfarbstoff auf Anthocyanbasis ein Konzentrat aus einer oder mehreren der folgenden Arten ist: schwarze Karotte, violette Karotte, violette Süßkartoffel, Hibiskus, Rettich, rote Kartoffel, Traube, Aronia, Heidelbeere und Holunder.

4. Das Fettpulver auf Emulsionsbasis nach einem der vorhergehenden Ansprüche, wobei der pH-Wert des DP 3 bis 4, vorzugsweise 3 bis 3,5, beträgt.

5. Das Fettpulver auf Emulsionsbasis nach einem der vorhergehenden Ansprüche, wobei das Fett im CP einen Schmelzpunkt von 55 bis 70 °C hat.

6. Das Fettpulver auf Emulsionsbasis nach einem der vorhergehenden Ansprüche, das 1 bis 20 Gew.-% DP und 80 bis 99 Gew.-% CP enthält.

7. Das Fettpulver auf Emulsionsbasis nach einem der vorhergehenden Ansprüche, das eine Partikelgröße (D50) von 5 bis 600 μm, vorzugsweise von 10 bis 150 μm, aufweist.

8. Verwendung eines Fettpulvers auf Emulsionsbasis nach einem der vorhergehenden Ansprüche als Farbstoff in Lebensmitteln, die als tierische Fleischanaloga dienen.

9. Fleischähnliches Lebensmittelprodukt, das eine Matrix auf Pflanzenbasis und ein Fettpulver auf Emulsionsbasis nach einem der Ansprüche 1 bis 7 enthält, wobei die Matrix auf Pflanzenbasis eine Proteinquelle und ein Bindemittel umfasst.

10. Fleischähnliches Lebensmittelprodukt nach Anspruch 9, das 0,5 bis 20 Gew.-%, vorzugsweise 1 bis 10 Gew.-%, des Fettpulvers auf Emulsionsbasis, bezogen auf das Gesamtgewicht des Lebensmittelprodukts, enthält.

11. Fleischähnliches Lebensmittelprodukt nach Anspruch 9 oder 10, wobei die Matrix auf Pflanzenbasis einen pH-Wert von 5 bis 10, vorzugsweise 5 bis 8, aufweist.

12. Ein Verfahren zur Herstellung eines Fettpulvers auf Emulsionsbasis, das die folgenden Schritte umfasst:

a) Bereitstellung einer dispergierbaren wässrigen Phase (DP), die Wasser umfasst, und Bereitstellung einer kontinuierlichen Fettphase (CP), wobei die CP ein Fett mit einem Schmelzpunkt von 40 bis 80 °C umfasst;
b) Zugabe eines Lebensmittelfarbstoffs zum DP;
c) Einstellung des pH-Wertes von DP auf einen Wert zwischen 2,5 und 4,5;
d) Emulgieren des DP im CP, um eine Wasser-in-Fett-Emulsion zu erzeugen;
e) Stabilisierung der Wasser-in-Fett-Emulsion zur Herstellung des Fettpulvers auf Emulsionsbasis;

wobei die Mengen an DP und CP so sind, dass ein Fettpulver auf Emulsionsbasis erhalten wird, das 1 bis 40 Gew.-% DP und 60 bis 99 Gew.-% CP umfasst, wobei die Gew.-% auf das Gesamtgewicht des Fettpulvers auf Emulsionsbasis bezogen sind.

13. Verfahren nach Anspruch 12, wobei in Schritt d) eine Tröpfchengröße des DP von 0,01 μm bis 5 μm, vorzugsweise von 0,01 μm bis 1 μm, erreicht wird.

14. Verfahren nach Anspruch 13, wobei Schritt d) mit einem auf einem Rotor-Stator-Prinzip basierenden Verfahren, vorzugsweise einem Membranemulgierverfahren, durchgeführt wird.

15. Verfahren nach einem der Ansprüche 12 bis 14, wobei Schritt e) in einem gekühlten Sprühturm durchgeführt wird, in dem das Fett unter den Schmelzpunkt des Fettes abgekühlt wird.

## Revendications

1. Poudre grasse à base d'émulsion comprenant

1 à 40 % en poids d'une phase aqueuse dispersible (DP) dans laquelle la DP comprend de l'eau et un colorant alimentaire et la DP a un pH de 2,5 à 4,5 ;
60 à 99 % en poids d'une phase grasse continue (CP) dans laquelle la CP comprend une matière grasse ayant un point de fusion de 40 à 80 °C ;
dans lequel les % en poids sont basés sur le poids total de la poudre de graisse à base d'émulsion.

**2.** La poudre grasse à base d'émulsion selon la revendication 1, dans laquelle le colorant alimentaire est un colorant alimentaire dépendant du pH, de préférence **un** colorant alimentaire à base d'anthocyanine .

**3.** La poudre grasse à base d'émulsion selon la revendication 2, dans laquelle le colorant alimentaire à base d'anthocyanine est un concentré provenant d'une ou plusieurs carottes noires, carottes violettes, patates douces violettes, hibiscus, radis, pommes de terre rouges, raisins, aronia, myrtilles et baies de sureau.

**4.** La poudre grasse à base d'émulsion selon l'une quelconque des revendications précédentes, dans laquelle le pH du DP est compris entre 3 et 4, de préférence entre 3 et 3,5.

**5.** La poudre grasse à base d'émulsion selon l'une quelconque des revendications précédentes, dans laquelle la matière grasse de la PC a un point de fusion compris entre 55 et 70 °C.

**6.** La poudre grasse à base d'émulsion selon l'une quelconque des revendications précédentes, qui comprend de 1 à 20 % en poids de DP et de 80 à 99 % en poids de CP.

**7.** La poudre grasse à base d'émulsion selon l'une quelconque des revendications précédentes, qui a une taille de particules (D50) de 5 à 600 μm, de préférence de 10 à 150 μm.

**8.** Utilisation d'une poudre grasse à base d'émulsion selon l'une quelconque des revendications précédentes, comme colorant dans des produits alimentaires qui servent d'analogues de viande animale.

**9.** Produit alimentaire de type viande contenant une matrice végétale et une poudre grasse à base d'émulsion selon l'une des revendications 1 à 7, dans lequel la matrice végétale comprend une source de protéines et un liant.

**10.** Le produit alimentaire de type viande selon la revendication 9, comprenant de 0,5 à 20 % en poids, de préférence de 1 à 10 % en poids de la poudre de graisse à base d'émulsion, par rapport au poids total du produit alimentaire.

**11.** Produit alimentaire de type viande selon la revendication 9 ou 10, dans lequel la matrice végétale a un pH compris entre 5 et 10, de préférence entre 5 et 8.

**12.** Une méthode de production d'une poudre grasse à base d'émulsion, comprenant les étapes suivantes

a) fournir une phase aqueuse dispersible (DP) comprenant de l'eau et fournir une phase grasse continue (CP) dans laquelle la CP comprend une matière grasse dont le point de fusion est compris entre 40 et 80 °C ;
b) l'ajout d'un colorant alimentaire au PDD ;
c) ajuster le pH du DP à une valeur comprise entre 2,5 et 4,5 ;
d) émulsifier le DP dans la CP pour créer une émulsion eau-graisse ;
e) stabiliser l'émulsion eau dans la graisse pour obtenir la poudre de graisse à base d'émulsion ;

dans lequel les quantités de DP et de CP sont telles que l'on obtient une poudre de graisse à base d'émulsion comprenant de 1 à 40 % en poids de DP et de 60 à 99 % en poids de CP, les % en poids étant basés sur le poids total de la poudre de graisse à base d'émulsion.

**13.** La méthode selon la revendication 12, dans laquelle, à l'étape d), la taille des gouttelettes du PD est comprise entre 0,01 μm et 5 μm, de préférence entre 0,01 μm et 1 μm.

**14.** La méthode selon la revendication 13, dans laquelle l'étape d) est réalisée par un procédé basé sur le principe du rotor-stator, de préférence un procédé d'émulsification par membrane.

**15.** La méthode selon l'une des revendications 12 à 14, dans laquelle l'étape e) est réalisée dans une tour de pulvérisation réfrigérée où la graisse est refroidie à un niveau inférieur à son point de fusion.

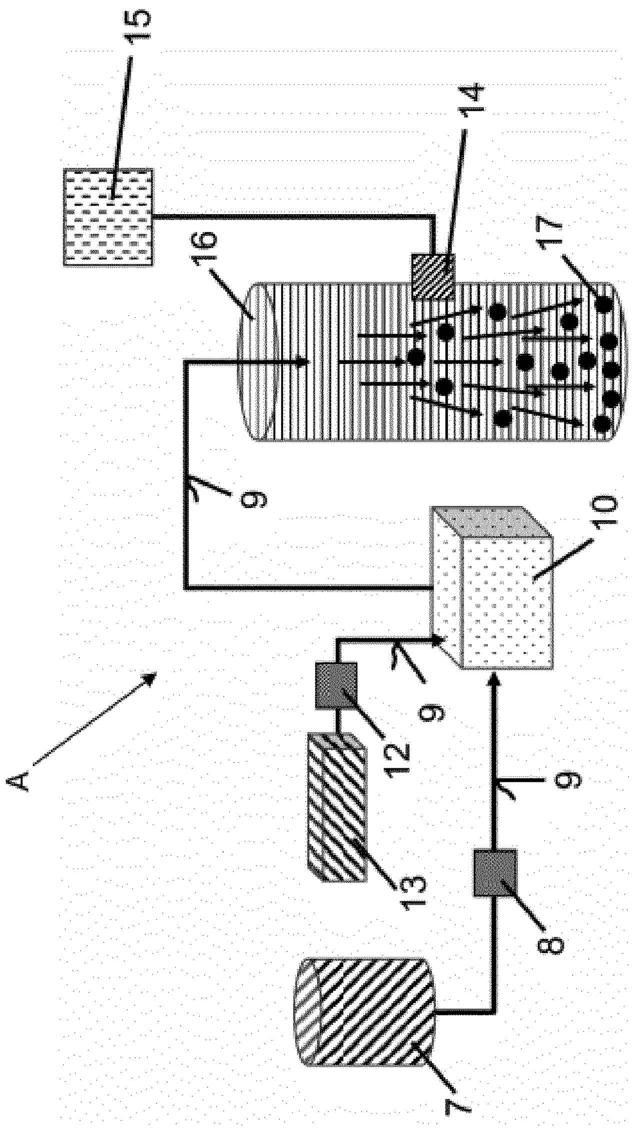


Figure 1

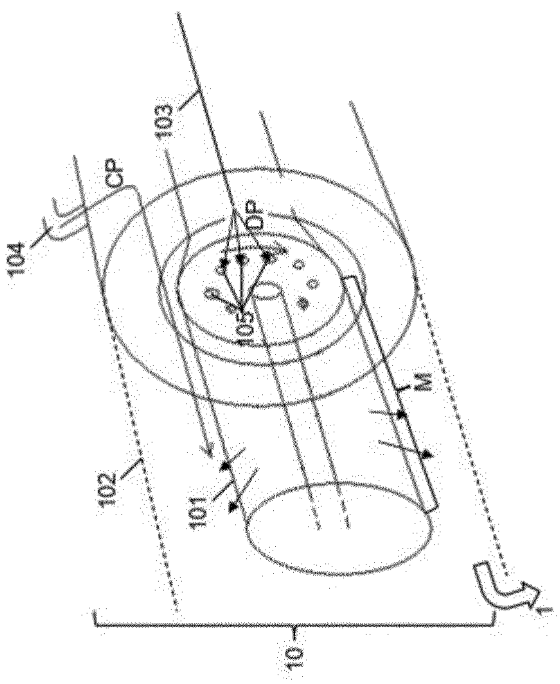


Figure 2a

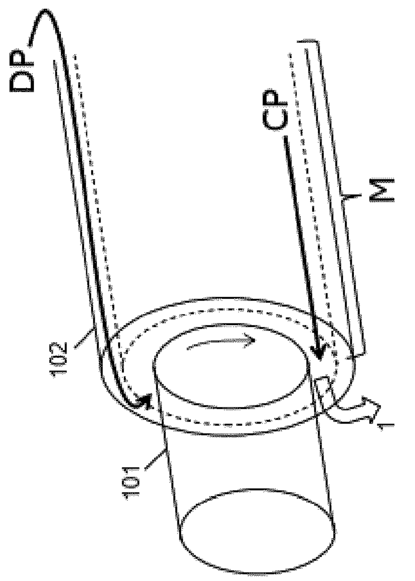


Figure 2b

Figure 3

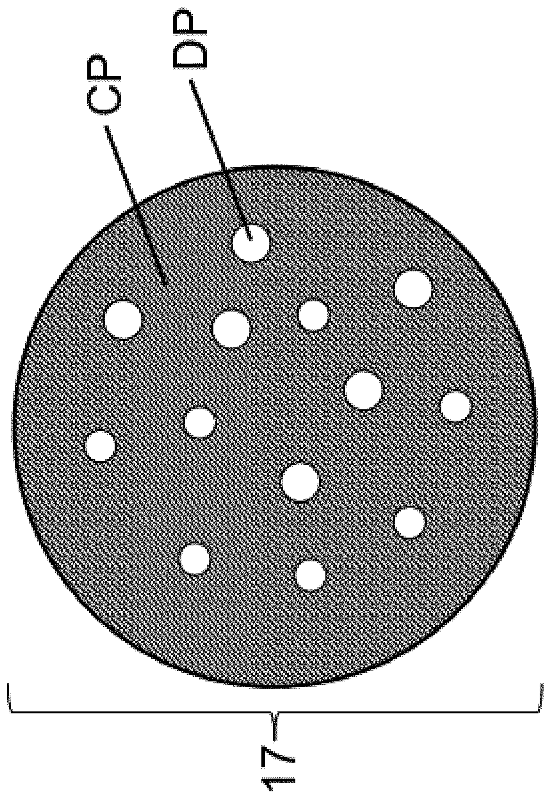

Figure 4

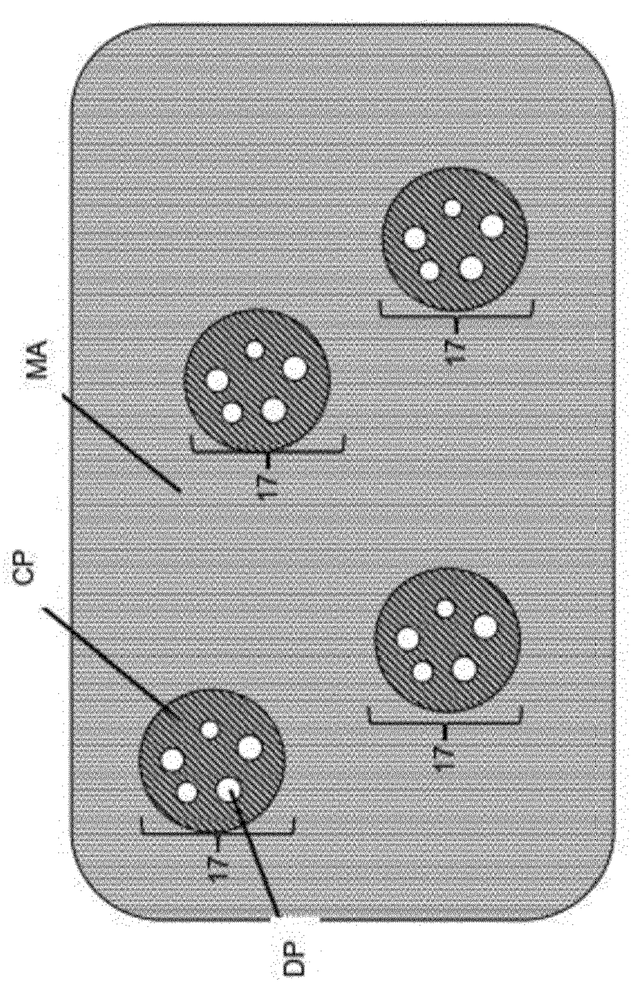

Figure 5

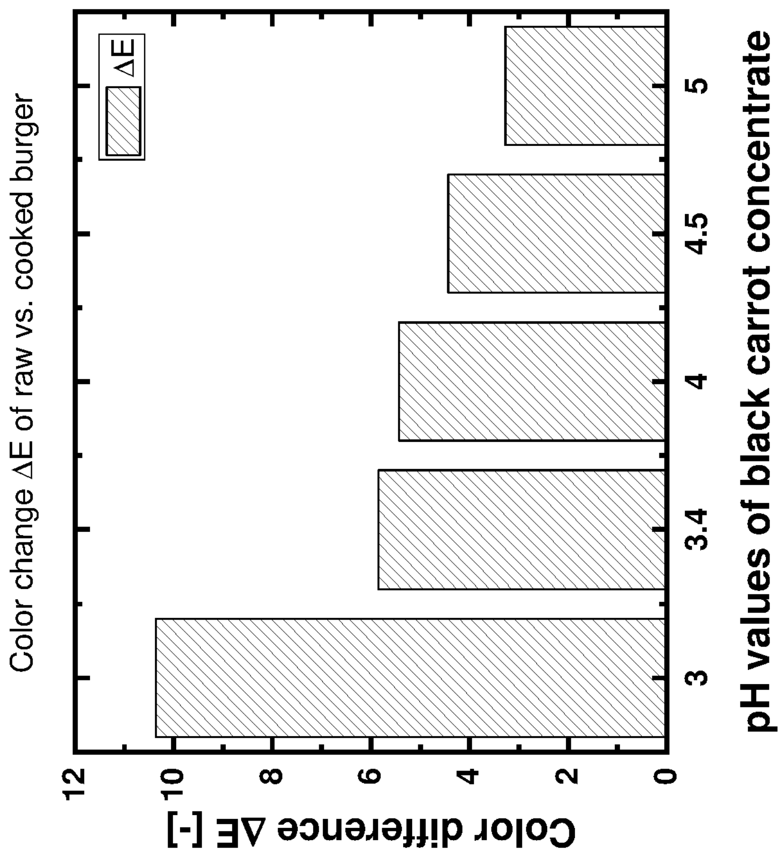
Color change ΔE of raw vs. cooked burger
ΔE
Color difference ΔE [-]
0
2
4
6
8
10
12
3
3.4
4
4.5
5
pH values of black carrot concentrate

Figure 6

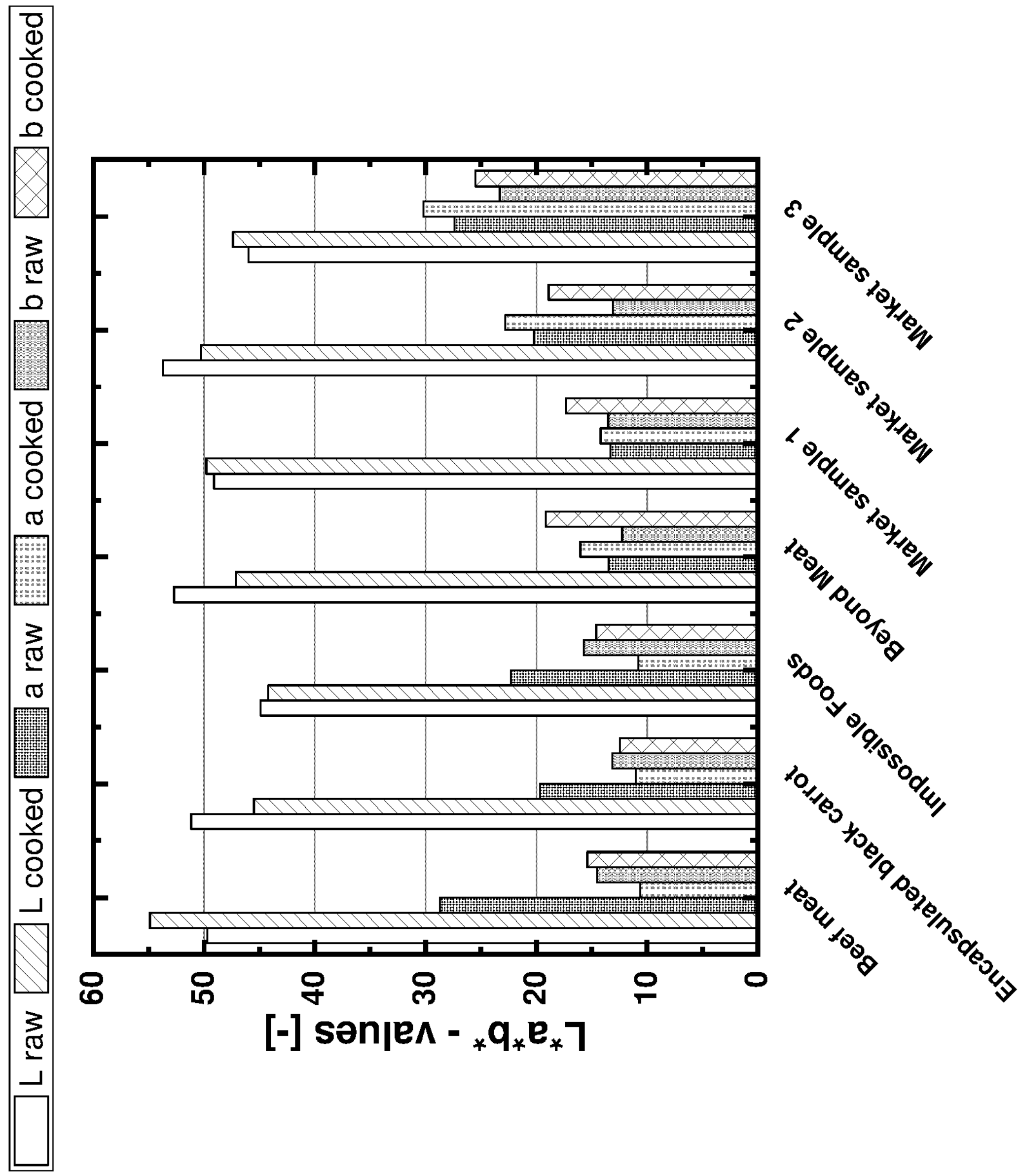

L raw
L cooked
a raw
a cooked
b raw
b cooked
L*a*b* - values [-]
0
10
20
30
40
50
60
Beef meat
Encapsulated black carrot
Impossible Foods
Beyond Meat
Market sample 1
Market sample 2
Market sample 3

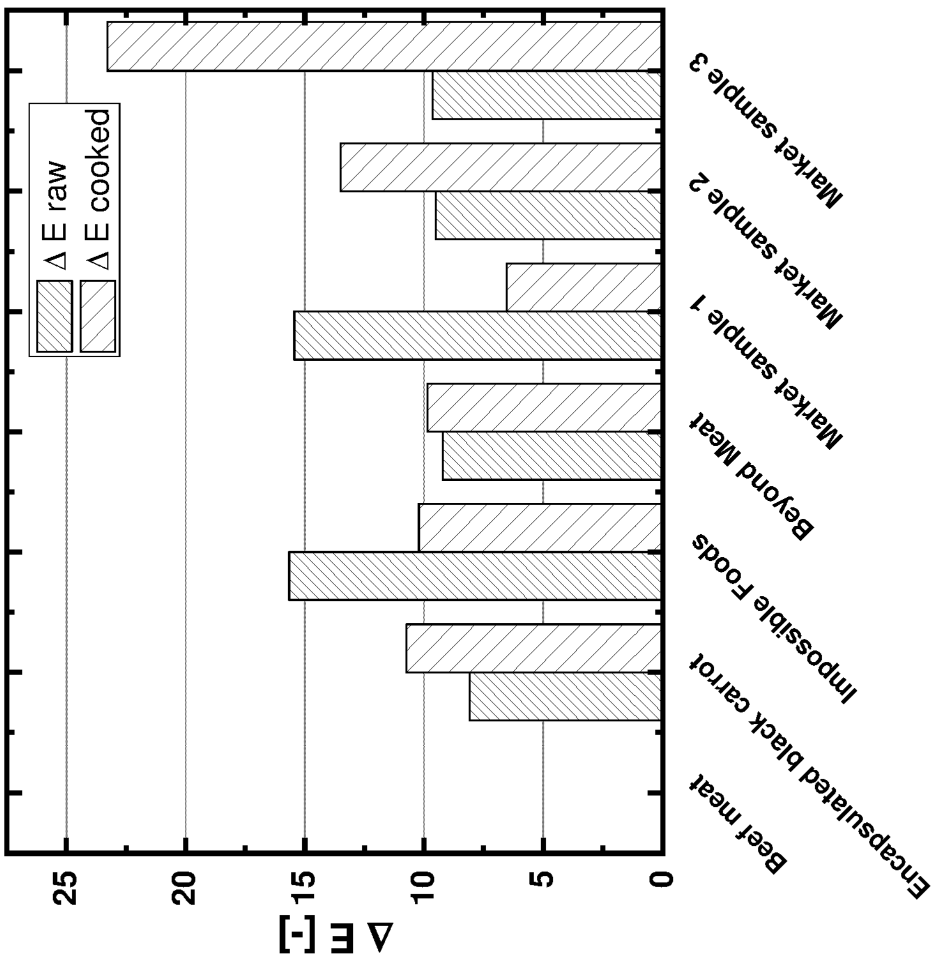
Δ E raw
Δ E cooked
Δ E [-]
0
5
10
15
20
25
Beef meat
Encapsulated black carrot
Impossible Foods
Beyond Meat
Market sample 1
Market sample 2
Market sample 3

Figure 7

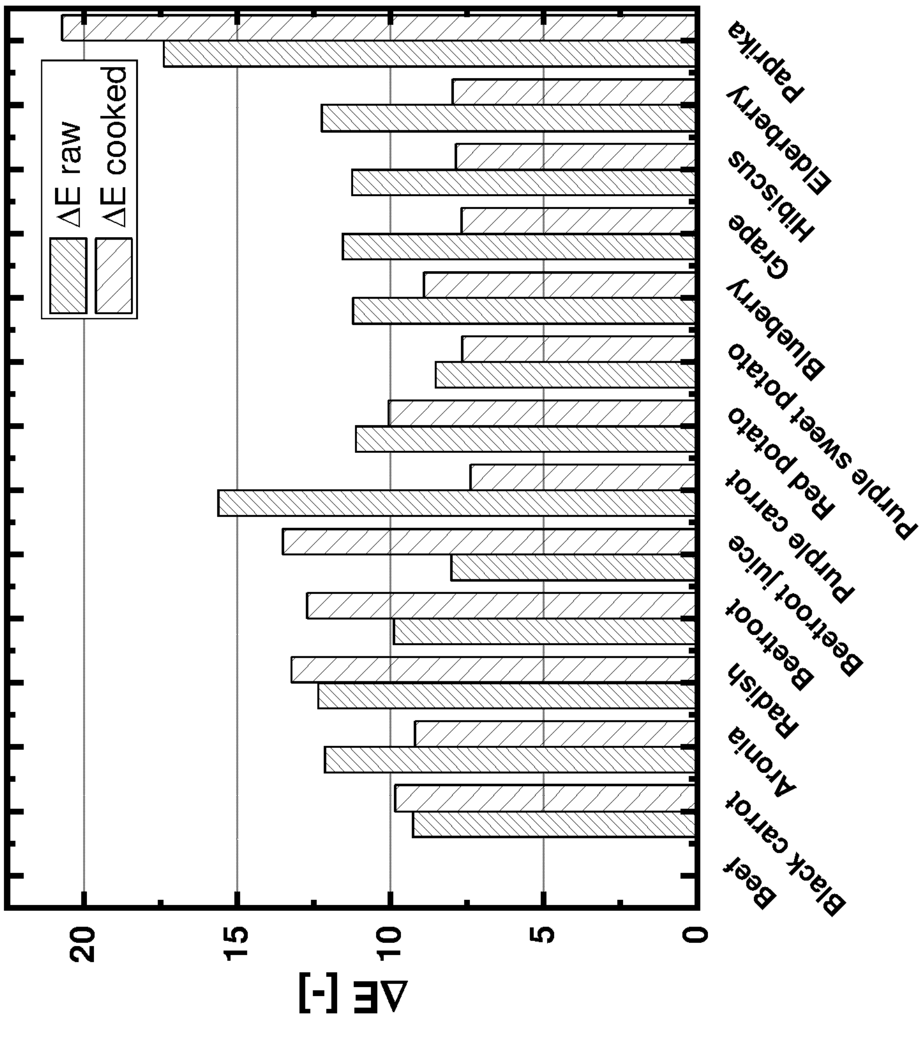
ΔE raw
ΔE cooked
ΔE [-]
0
5
10
15
20
Beef
Black carrot
Aronia
Radish
Beetroot
Beetroot juice
Purple carrot
Red potato
Purple sweet potato
Blueberry
Grape
Hibiscus
Elderberry
Paprika

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20180310599 A1
- EP 3628173 A1

### Non-patent literature cited in the description


- Scientific Opinion on the reevaluation of anthocyanins (E163) as a food additive. *EFSA Journal*, 2013, vol. 11 (4), 3145